(19) Europäisches Patentamt

European Patent Office

Office européen des brevets

(11) EP 1 438 815 B1

(12) FASCICULE DE BREVET EUROPEEN

(45) Date de publication et mention
de la délivrance du brevet:
**29.06.2005 Bulletin 2005/26**

(51) Int Cl.⁷: **H04L 25/03**, H04B 1/10,
H04B 7/08

(21) Numéro de dépôt: 02790534.8

(22) Date de dépôt: **23.10.2002**

(86) Numéro de dépôt international:
**PCT/FR2002/003624**

(87) Numéro de publication internationale:
**WO 2003/036893 (01.05.2003 Gazette 2003/18)**

(54) **ANNULEUR D INTERFERENCES ENTRE SYMBOLES**

ZWISCHENSYMBOLSTÖRUNGSLÖSCHER

INTER-SYMBOL INTERFERENCE CANCELLER

(84) Etats contractants désignés:
**AT BE BG CH CY CZ DE DK EE ES FI FR GB GR
IE IT LI LU MC NL PT SE SK TR**

(30) Priorité: **26.10.2001 FR 0113991**

(43) Date de publication de la demande:
**21.07.2004 Bulletin 2004/30**

(73) Titulaire: **FRANCE TELECOM
75015 Paris (FR)**

(72) Inventeurs:
• **LAOT, Christophe
F-29217 Plougonvelin (FR)**
• **LANGLAIS, Charlotte
35700 Rennes (FR)**
• **HELARD, Maryline
F-35000 Rennes (FR)**

(74) Mandataire: **Bentz, Jean-Paul
Cabinet Ballot
4 rue du Général Hoche
BP 855
56100 Lorient (FR)**

(56) Documents cités:
EP-A- 0 833 484        WO-A-93/22854
US-A- 5 787 131        US-B1- 6 307 901

• GERSHO A ET AL: "ADAPTIVE CANCELLATION
OF CHANNEL NONLINEARITIES FOR DATA
TRANSMISSION" LINKS FOR THE FUTURE.
AMSTERDAM, MAY 14 - 17, 1984,
INTERNATIONAL CONFERENCE ON
COMMUNICATIONS, AMSTERDAM,
NORTH-HOLLAND, NL, vol. 3, mai 1984
(1984-05), pages 1239-1242, XP000793863
• REED J H ET AL: "A frequency domain
time-dependent adaptive filter for interference
rejection" IEEE, 1984, XP010071970

## Description

La présente invention concerne un dispositif pour annuler les interférences entre symboles dans un signal numérique échantillonné. L'invention trouve plus particulièrement son application dans le domaine des transmissions numériques, et est notamment prévue pour être incorporée dans un récepteur de signaux numériques afin d'annuler les interférences entre symboles résultant de la présence de trajets multiples dans le canal de transmission des données numériques.

Le document EP-A-0 833 484 décrit un dispositif égalisant un signal OFDM reçu par un récepteur. L'égalisateur est placé dans le système de réception entre un module de synchronisation et un module de décodage binaire du signal reçu. Le récepteur comprend un égalisateur vectoriel récursif corrigeant le signal reçu dans le domaine temporel. L'égalisateur vectoriel récursif comprend des moyens de traitement estimant chaque symbole transmis en fonction d'une estimation du symbole transmis précédemment. Un récepteur associé comprend au moins deux estimateurs pour traiter dynamiquement les coefficients d'au moins deux matrices triangulaires représentant la réponse impulsionnelle du canal de transmission.

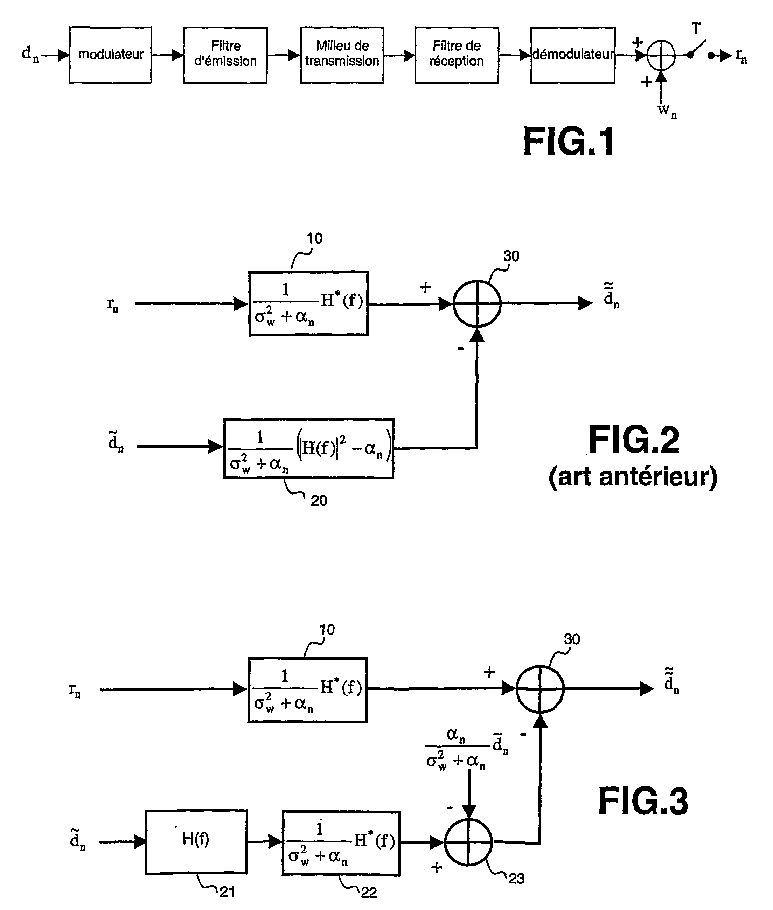

La figure 1 illustre une chaîne de transmission de symboles complexes $\{d_n\}_{n\in\mathbb{N}}$ émis par une source de symboles. Cette chaîne de transmission comprend un modulateur, un filtre d'émission, un milieu de transmission, un filtre de réception, un démodulateur, un additionneur introduisant des échantillons de bruit blanc gaussien $\{w_n\}_{n\in\mathbb{N}}$ et un échantillonneur de période d'échantillonnage T. L'ensemble modulateur, filtre d'émission, milieu de transmission, filtre de réception et démodulateur forme un canal de transmission discret équivalent engendrant des interférences entre symboles (IES). La chaîne de transmission délivre une suite de symboles complexes $\{r_n\}_{n\in\mathbb{N}}$ définis par la relation suivante :

$$r_n = \sum_{k=-L_1+1}^{L_2} \Gamma_k(n)d_{n-k} + w_n \qquad (1)$$

où les $(\Gamma_{-L1+1}(n),...,\Gamma_0(n),...,\Gamma_{L2}(n))$ sont les coefficients éventuellement complexes du canal de transmission discret équivalent à l'instant n, et $L_2$ et $L_1$-1 représentent respectivement le nombre de symboles complexes passés et futurs engendrant l'interférence sur le symbole complexe courant.

La fonction de transfert du canal de transmission discret équivalent qui introduit les interférences entre symboles est, à l'instant n, :

$$H_n(f) = \sum_{k=-L_1+1}^{L_2} \Gamma_k(n)\exp(-j2\pi fkT) \qquad (2)$$

où T est la période temporelle séparant deux symboles complexes consécutifs dans la suite des symboles complexes $\{r_n\}_{n\in\mathbb{N}}$.

Par souci de simplification, la fonction de transfert $H_n(f)$ est notée H(f) dans la suite de la description.

Dans les équations (1) et (2), on a considéré que la réponse impulsionnelle du canal de transmission discret équivalent (correspondant à la transformée de Fourier inverse de la fonction de transfert) définie par L = $L_1+L_2$ coefficients.

Un des annuleurs d'interférences entre symboles les plus connus est décrit dans le document intitulé "Adaptive Cancellation of Intersymbol Interference for Data Transmission" de A.Gersho et T.L Lim, Bell Systems technical journal, Vol.11, n°60, pp1997-2021, Nov 1981.

Un schéma de la structure de cet annuleur d'interférences entre symboles est représenté à la figure 2 de la présente demande.

Cet annuleur d'interférences comprend un premier filtre 10, appelé filtre avant, pour traiter la suite de symboles complexes $\{r_n\}_{n\in\mathbb{N}}$, un deuxième filtre 20, appelé filtre arrière, pour traiter une suite de symboles complexes $\{\tilde{d}_n\}_{n\in\mathbb{N}}$ et un circuit soustracteur 30 pour retrancher de la sortie du filtre 10 la sortie du filtre 20. Le circuit soustracteur 30 délivre une suite de symboles complexes $\{\tilde{\tilde{d}}_n\}_{n\in\mathbb{N}}$ débarrassés des interférences entre symboles engendrées par le canal de transmission.

La suite $\{\tilde{d}_n\}_{n\in\mathbb{N}}$ représente soit les symboles complexes émis à travers le canal de transmission par la source d'émission si le système utilise une séquence d'apprentissage, soit des symboles complexes qui sont une estimation des symboles complexes émis par la source d'émission. Dans ce deuxième cas, la suite de symboles $\{\tilde{d}_n\}_{n\in\mathbb{N}}$ est fournie

par un autre organe du récepteur, par exemple un égaliseur linéaire transverse ou un égaliseur à maximum de vraisemblance.

Par souci de généralisation, on suppose que le canal de transmission est variant dans le temps. Les coefficients de la réponse impulsionnelle ne sont donc pas normalisés. On a alors la relation suivante:

$$\sum_{k=-L_1+1}^{L_2} \left| \Gamma_k(n) \right|^2 = \alpha_n \; .$$

On suppose par ailleurs que le signal émis est de puissance unité, et donc que la variance des symboles émis $\sigma_d^2$ est égale à 1. Dans cette hypothèse, $\alpha_n$ correspond à la puissance estimée du canal de transmission.

Le filtre 10 du dispositif converge vers un filtre adapté au canal de transmission. Les coefficients optimaux, par exemple au sens du critère du minimum d'erreur quadratique moyenne, du filtre 10 sont donc ceux du filtre adapté au canal de transmission. La fonction de transfert optimale de ce filtre est donc égale à $\frac{2}{\sigma_w^2 + \alpha_n} H^*(f)$. $H^*(f)$ désigne le conjugué de la fonction de transfert $H(f)$ et $\sigma_w^2$ désigne la variance du bruit gaussien.

Le filtre 20 est quant à lui destiné à reconstruire les interférences entre symboles présentes en sortie du filtre 10. Le filtre 20 converge donc vers un filtre de fonction de transfert

$$\frac{1}{\sigma_w^2 + \alpha_n} \left( \left| H(f) \right|^2 - \alpha_n \right).$$

Les filtres 10 et 20 sont donc respectivement de taille L et 2L-1. Les coefficients des filtres sont fournis au fur et à mesure du traitement soit par un algorithme d'estimation de canal, soit par un algorithme d'adaptation visant à minimiser un critère d'optimisation donné.

L'invention procède d'une recherche menée relativement aux annuleurs d'interférences entre symboles en vue de restreindre la taille des filtres nécessaires à leur mise en oeuvre, ce qui va permettre de limiter les dégradations apportées par un trop grand nombre de coefficients et réduire le temps de convergence des coefficients.

L'invention concerne un dispositif pour annuler les interférences entre symboles dans une suite d'échantillons d'entrée d'un signal numérique provenant d'un canal de transmission défini par sa fonction de transfert H(f) dans le domaine fréquentiel, chaque échantillon étant représentatif d'un symbole complexe, caractérisé en ce qu'il comporte :

- un premier filtre qui converge vers un filtre de fonction de transfert H(f), lequel premier filtre reçoit en entrée une suite d'échantillons représentative du signal numérique émis à l'entrée dudit canal de transmission,
- un circuit soustracteur pour retrancher la sortie dudit premier filtre à ladite suite d'échantillons d'entrée,
- un second filtre qui converge vers un filtre adapté au canal de transmission, lequel second filtre reçoit en entrée la sortie dudit circuit soustracteur, et
- un circuit de sortie destiné à combiner la sortie dudit second filtre et la suite des échantillons représentative du signal numérique émis à l'entrée dudit canal de transmission pour générer une suite de symboles complexes débarrassés des interférences entre symboles engendrées par le canal de transmission.

Le circuit de sortie est par exemple un circuit additionneur destiné à additionner la sortie dudit second filtre avec ladite suite des échantillons représentative du signal numérique émis à l'entrée dudit canal de transmission.

De préférence, les échantillons de la suite représentative du signal numérique émis à l'entrée du canal de transmission qui sont traités par le circuit additionneur sont affectés d'un coefficient correcteur d'amplitude.

Le principal avantage de ce dispositif d'annulation d'interférences est qu'il comprend deux filtres utilisant un nombre réduit de coefficients.

Selon une caractéristique de l'invention, dans le cas d'un canal de transmission perturbé par un bruit additif ayant des coefficients variant dans le temps, le coefficient correcteur d'amplitude est fonction de la puissance estimée du canal de transmission et de la variance du bruit additif.

L'invention concerne également un récepteur de signaux numériques caractérisé en ce qu'il comporte un dispositif d'annulation des interférences entre symboles tel que décrit précédemment et un circuit dédié pour générer ladite suite d'échantillons représentative du signal numérique émis à l'entrée dudit canal de transmission. Le circuit dédié est par exemple un égaliseur linéaire transverse ou un égaliseur à maximum de vraisemblance recevant en entrée la suite d'échantillons d'entrée.

L'invention concerne également un dispositif de turboégalisation comportant une pluralité de modules de turboégalisation en série caractérisé en ce que chaque module de turboégalisation de rang supérieur à 1 dans ladite série de modules comporte un dispositif d'annulation d'interférences tel que décrit précédemment et en ce que, pour chaque dispositif d'annulation d'interférences, la suite d'échantillons représentative du signal numérique émis à l'entrée du canal de transmission est fournie par le module de turboégalisation de rang inférieur.

L'invention concerne également un dispositif pour annuler les interférences entre symboles dans J suites d'échantillons d'entrée d'un signal numérique provenant de J canaux de transmission définis par leurs fonctions de transfert $H^{(i)}(f)$ dans le domaine fréquentiel, J étant un entier supérieur ou égal à 2, chaque échantillon étant représentatif d'un symbole complexe, caractérisé en ce qu'il comporte :

- un premier ensemble de J filtres qui convergent chacun vers un filtre de fonction de transfert $H^{(j)}(f)$, $j \in [1,...,J]$, chacun des filtres dudit premier ensemble recevant en entrée une suite d'échantillons représentative du signal numérique émis à l'entrée desdits canaux de transmission,
- un ensemble de J circuits soustracteurs pour retrancher les sorties desdits J filtres du premier ensemble auxdites J suites d'échantillons d'entrée respectivement,
- un second ensemble de J filtres qui convergent vers des filtres adaptés auxdits J canaux de transmission, chaque filtre dudit second ensemble recevant en entrée la sortie d'un desdits J circuits soustracteurs, et
- un premier circuit additionneur pour additionner les échantillons délivrés par les J filtres dudit second ensemble,
- un circuit de sortie destiné à combiner la sortie dudit premier circuit additionneur et la suite des échantillons représentative du signal numérique émis à l'entrée desdits canaux de transmission pour générer une suite de symboles complexes débarrassés des interférences entre symboles engendrées par lesdits canaux de transmission. Ce dispositif est utilisé en cas de réceptions multiples ou de réception dite fractionnée des symboles émis.

Comme précédemment, les coefficients des filtres desdits premier et second ensembles de filtres sont déterminés par un circuit de traitement numérique mettant en oeuvre un algorithme d'adaptation se basant sur un critère d'optimisation visant à minimiser l'influence des interférences entre symboles à la sortie dudit dispositif ou par un circuit d'estimation des canaux de transmission.

Enfin, l'invention concerne également un dispositif de turboégalisation comportant une pluralité de modules de turboégalisation en série caractérisé en ce que chaque module de turboégalisation de rang supérieur à 1 dans ladite série de modules comporte un dispositif d'annulation d'interférences entre symboles tel que décrit précédemment pour une réception multiple ou fractionnée des symboles et en ce que, pour chaque dispositif d'annulation d'interférences, ladite suite d'échantillons représentative du signal numérique émis à l'entrée du canal de transmission est fournie par le module de turboégalisation de rang inférieur.

D'autres caractéristiques et avantages de l'invention apparaîtront à la lecture de la description détaillée qui suit et qui est faite en référence aux dessins annexés, parmi lesquels :

- La figure 1, déjà décrite, illustre schématiquement un canal de transmission discret;
- la figure 2, déjà décrite, représente le schéma d'un annuleur d'interférences entre symboles de l'art antérieur;
- la figure 3 représente un schéma équivalent de la structure d'annuleur de la figure 2;
- la figure 4 représente le schéma d'un annuleur d'interférences entre symboles selon l'invention;
- la figure 5 représente un annuleur d'interférences entre symboles conforme à l'invention comprenant un circuit d'estimation de canal pour déterminer les coefficients des deux filtres de l'annuleur;
- la figure 6 représente un annuleur d'interférences entre symboles conforme à l'invention comprenant un circuit de traitement numérique mettant en oeuvre un algorithme d'adaptation pour déterminer les coefficients des deux filtres de l'annuleur;
- la figure 7 montre une application de l'annuleur d'interférences de l'invention dans un dispositif de turbo-égalisation;
- la figure 8 montre un mode de réalisation amélioré de l'annuleur d'interférences dans le cadre d'une turbo-égalisation avec estimation de canal;
- la figure 9 illustre schématiquement les canaux de transmission en cas de réceptions multiples au niveau de l'annuleur d'interférences de l'invention;
- la figure 10 représente le schéma d'un annuleur d'interférences de l'art antérieur employé en cas de réceptions multiples; et
- la figure 11 représente le schéma d'un annuleur d'interférences selon l'invention employé en cas de réceptions multiples.

Comme indiqué précédemment, la structure classique de l'annuleur d'interférences entre symboles montrée à la figure 2 nécessite la mise en oeuvre d'un premier filtre à L coefficients et d'un second filtre à 2L-1 coefficients. L'invention vise à déterminer une structure d'annuleur nécessitant un nombre plus restreint de coefficients.

Comme montré à la figure 3, le filtre 20 peut être décomposé en deux filtres, 21 et 22, montés en cascade et un circuit soustracteur 23. Le filtre 21 converge vers un filtre de fonction de transfert H(f) et le filtre 22 vers un filtre de fonction de transfert $\frac{\sigma_w^2 + \alpha}{2}$ H*(f). Ces deux filtres étant linéaires, ils peuvent être intervertis. Le circuit soustracteur 23 est chargé de soustraire de la suite d'échantillons complexes issue de la cascade des filtres 21 et 22 la suite des échantillons complexes $\{\tilde{d}_n\}_{n \in \mathbb{N}}$ affectés du coefficient correcteur d'amplitude $\frac{\sigma_w^2 + \alpha}{2}$. Le filtre adapté au canal de transmission de fonction de transfert $\frac{\sigma_w^2 + \alpha}{2}$ H*(f) est présent dans les deux branches de l'annuleur, à savoir la branche traitant les échantillons complexes $\{r_n\}_{n \in \mathbb{N}}$ et la branche traitant les échantillons complexes $\{\tilde{d}_n\}_{n \in \mathbb{N}}$.

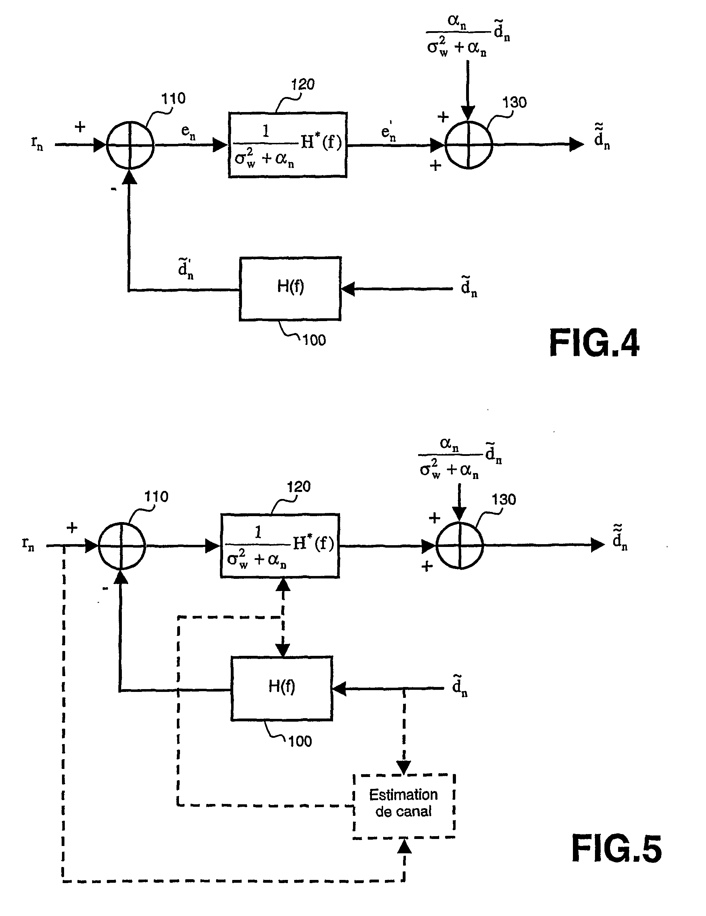

Selon l'invention, on supprime cette redondance du filtre adapté au canal de transmission pour diminuer le nombre de coefficients nécessaires à la mise en oeuvre de l'annuleur. La figure 4 représente une structure de l'annuleur d'interférences de l'invention.

L'annuleur d'interférences entre symboles de l'invention comporte un premier filtre, 100, qui converge vers un filtre de fonction de transfert H(f). Ce filtre 100 reçoit en entrée la suite de symboles complexes $\{\tilde{d}_n\}_{n \in \mathbb{N}}$ et délivre une suite de symboles La suite de symboles complexes $\{\tilde{d}'_n\}_{n \in \mathbb{N}}$ est par exemple fournie par un égaliseur linéaire transverse ou un égaliseur à maximum de vraisemblance prévu dans le récepteur. Un circuit soustracteur 110 est prévu pour soustraire de la suite de symboles complexes $\{r_n\}_{n \in \mathbb{N}}$ la suite de symboles complexes $\{\tilde{d}'_n\}_{n \in \mathbb{N}}$ et délivrer une suite de symboles complexes $\{e_n\}_{n \in \mathbb{N}}$. Cette dernière est ensuite filtrée par un second filtre 120. Le filtre 120 est un filtre qui converge vers un filtre de fonction de transfert $\frac{\sigma_w^2 + \alpha}{2}$ H*(f). La suite de symboles complexes délivrée par ce filtre, notée $\{e'_n\}_{n \in \mathbb{N}}$, est additionnée avec la suite des symboles complexes $\{\tilde{d}_n\}_{n \in \mathbb{N}}$ affectés du coefficient correcteur d'amplitude $\frac{\sigma_w^2 + \alpha}{2}$ au moyen d'un circuit additionneur 130, lequel délivre la suite de symboles complexes $\{\tilde{d}_n\}_{n \in \mathbb{N}}$.

Cette structure d'annuleur est équivalente en terme de filtrage à celle de la figure 2. Elle permet toutefois de diminuer sensiblement la taille des filtres de l'annuleur. Selon l'invention, l'annuleur d'interférences comporte deux filtres, 100 et 120, à L coefficients au lieu d'un filtre à L coefficients et d'un filtre à 2L-1 coefficients.

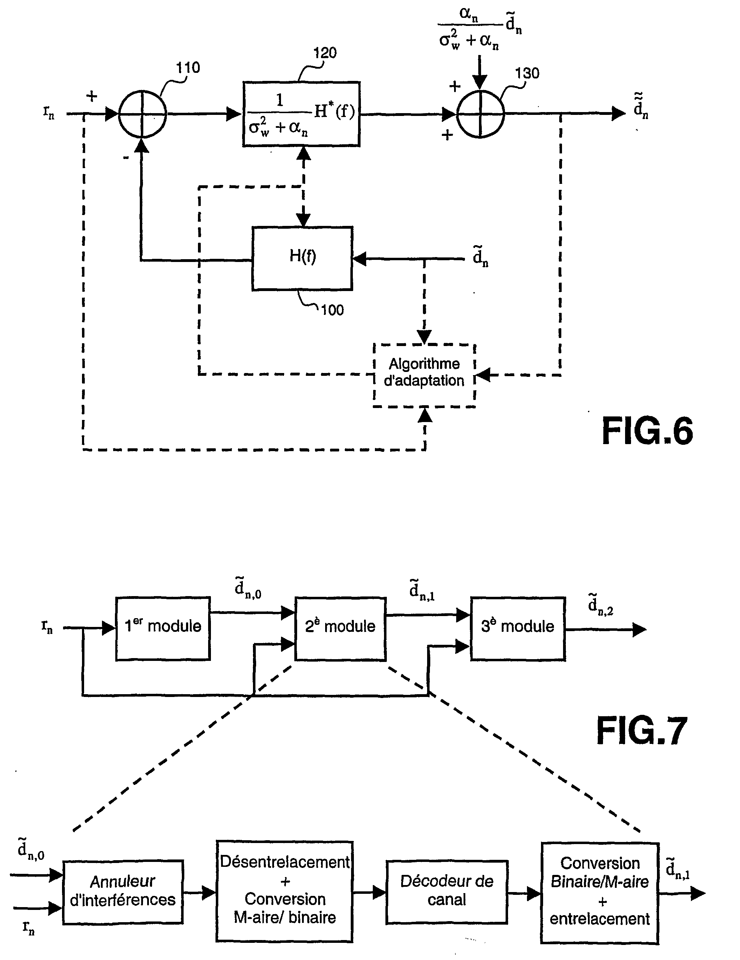

Les coefficients de filtre peuvent êtres déterminés soit par un circuit d'estimation du canal de transmission comme montré en traits pointillés à la figure 5, soit par un circuit de traitement numérique mettant en oeuvre un algorithme d'adaptation minimisant un critère d'optimisation donné comme montré en traits pointillés à la figure 6.

En référence à la figure 5, les coefficients des filtres 100 et 120 sont déterminés à partir d'un circuit d'estimation de canal. Plus exactement, l'estimation de canal est utilisée pour calculer les coefficients du filtre 100 et en déduire les coefficients du filtre 120. L'estimation de canal consiste à calculer les coefficients de la réponse impulsionnelle du canal de transmission. Ces coefficients sont déterminés par exemple par une méthode d'estimation de type RLS (Recursive Least Square) ou LMS (Least Mean Square). L'estimation de canal est particulièrement intéressante pour suivre les variations du canal de transmission lorsque celui-ci varie dans le temps. Cependant, cette solution est sous-optimale lorsque le canal de transmission ne varie pas ou peu dans le temps car elle ne minimise pas directement les interférences entre symboles à la sortie de l'annuleur.

Dans le cas de la figure 6, les coefficients des filtres de l'annuleur sont déterminés de manière adaptative à l'aide d'un algorithme d'adaptation qui calcule directement les coefficients de filtre en se basant sur un critère d'optimisation donné visant à minimiser les interférences entre symboles à la sortie de l'annuleur. Ce critère étant directement lié à la minimisation des interférences entre symboles à la sortie de l'annuleur, il est optimal pour la correction des interférences entre symboles lorsque le canal de transmission est invariant dans le temps.

Le dispositif de l'invention est tout particulièrement adapté pour supprimer les interférences engendrées par un canal hertzien lors de la transmission de données numériques.

Il peut être employé dans un dispositif de turbo-égalisation. Le principe de la turbo-égalisation est décrit dans la demande de brevet n°97 05978 déposée par la présente demanderesse. Un schéma de principe d'un dispositif de turbo-égalisation est représenté à la figure 7. Ce dispositif comporte plusieurs modules d'égalisation et de décodage identiques montés en série. Chaque module reçoit la suite d'échantillons $\{r_n\}_{n \in \mathbb{N}}$ issue du canal de transmission et retardée d'une quantité égale au temps de traitement des modules précédents et, pour les modules de rang supérieur à 1, la sortie du module précédent. Chaque module de rang supérieur à 1 comprend un annuleur d'interférences entre symboles conforme à l'invention, un désentrelaceur, un convertisseur M-aire/binaire, un décodeur de canal, un convertisseur binaire/M-aire et un désentrelaceur. Dans cette application, la suite d'échantillons $\{\tilde{d}_n\}_{n \in \mathbb{N}}$ nécessaires au fonctionnement de l'annuleur d'interférence d'un module donné est fournie par le module précédent. Dans la figure 7, $\tilde{d}_{n,p}$ désigne la suite d'échantillons délivrée par le module de turbo-égalisation de rang p.

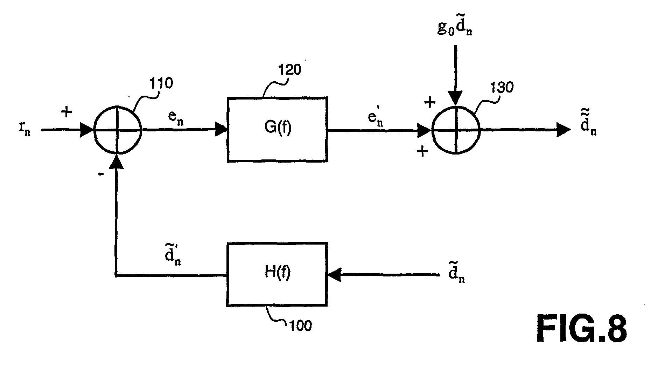

Dans le cadre de la turbo-égalisation, la structure de l'annuleur d'interférences peut être améliorée lorsque les coefficients des filtres sont déterminés par une estimation de canal. Dans cette structure améliorée, la valeur de la fonction de transfert du filtre 120 ainsi que la valeur du coefficient correcteur d'amplitude sont modifiées. Cette structure améliorée est montrée à la figure 8 où G(f) désigne la nouvelle fonction de transfert du filtre 120 et $g_0/\beta$ désigne le coefficient correcteur d'amplitude. Les expressions de G(f), $g_0$ et $\beta$ sont les suivantes :

$$G(f) = \frac{g_0}{\beta} \times \frac{H^*(f)}{|H(f)|^2 \cdot \left( \sigma_d^2 - E\left\{ \left| \tilde{d}_n \right|^2 \right\} \right) + \sigma_w^2}$$

avec

$$g_0 = \frac{\beta \cdot \sigma_d^2}{1 + \beta \cdot E\left\{ \left| \tilde{d}_n \right|^2 \right\}}$$

et

$$\beta = T. \int_{-\frac{1}{2T}}^{\frac{1}{2T}} \frac{|H(f)|^2}{|H(f)|^2 \cdot \left( \sigma_d^2 - E\left\{ \left| \tilde{d}_n \right|^2 \right\} \right) + \sigma_w^2} df$$

En turbo-égalisation, la variance

$$E\left\{ \left| \tilde{d}_n \right|^2 \right\}$$

varie à chaque itération. Ainsi, la fonction de transfert G(f) et le coefficient correcteur d'amplitude $g_0$ varient à chaque itération jusqu'à tendre vers les expressions indiquées dans les figures 4 à 6.

Avec cette structure, l'annuleur d'interférences des premiers modules du dispositif de turbo-égalisation joue également le rôle d'un égaliseur.

La structure d'annuleur décrite jusqu'à présent traitait une suite unique d'échantillons $\{r_n\}_{n \in \mathbb{N}}$ correspondant au cas SISO (une émission, une réception), le signal reçu par l'annuleur étant échantillonné au temps symbole. L'annuleur d'interférences ne comportait jusqu'à présent qu'une seule antenne de réception.

Ce cas peut être généralisé au cas SIMO (une émission, plusieurs réceptions), les signaux étant reçus par plusieurs antennes de réception.

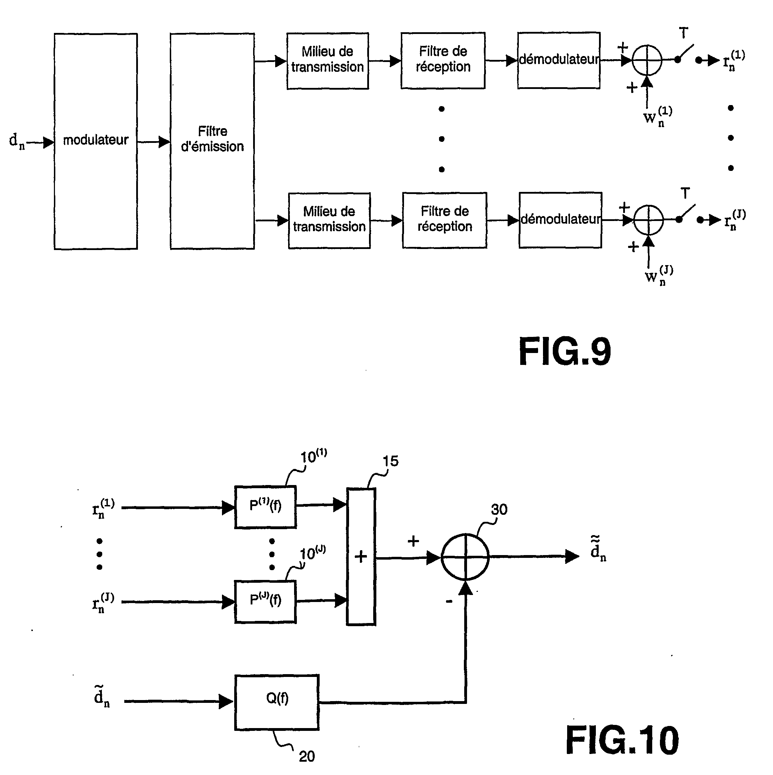

La figure 9 illustre la chaîne de transmission des symboles complexes $\{d_n\}_{n \in \mathbb{N}}$ pour ce cas-là. Cette figure est à comparer avec la figure 1. L'annuleur reçoit une pluralité de suites d'échantillons $r_n^{(j)}$, $j \in [1,...,J]$, ayant transité par différents canaux de transmission de fonction de transfert $H_n^{(j)}(f)$. Comme précédemment, par souci de simplification, la fonction de transfert $H_n^{(j)}(f)$ est notée $H^{(j)}(f)$ dans la suite de la description.

La chaîne de transmission telle que représentée à la figure 9 délivre les suites de symboles complexes $\{r_n^{(j)}\}_{n \in \mathbb{N}}$, avec $j \in [1,...,J]$, définis par la relation suivante :

$$r_n^{(i)} = \sum_{l=-L_1^{(j)}}^{L_2^{(j)}} \Gamma_l^{(j)}(n) d_{n-l} + w_n^{(j)}$$

où les $(\Gamma^{(j)}_l(n))$ sont les coefficients éventuellement complexes de la fonction de transfert $H^{(j)}(f)$ de l'un des canaux de transmission à l'instant n et $L^{(j)}$ représentent le nombre de symboles complexes passés et futurs engendrant l'interférence sur le symbole complexe courant.

La figure 10 est une généralisation de la figure 2 pour le cas SIMO. Dans cette figure, le filtre 10 est remplacé par J filtres $10^{(j)}$ de fonction de transfert $P^{(j)}(f), j \in [1,..,J]$, traitant chacun la suite d'échantillons $r_n^{(j)}$ et un circuit additionneur 15 pour additionner les symboles délivrés par les filtres $10^{(j)}$. Q(f) désigne la fonction de transfert du filtre 20. Les expressions mathématiques des fonctions de transfert $P^{(j)}(f)$ et de Q(f) sont les suivantes :

$$P^{(j)}(f) = \frac{\sigma_d^2}{1 + \beta \cdot E\left\{\left|\tilde{d}_n\right|^2\right\}} \cdot \frac{\dfrac{H^{(j)*}(f)}{\sigma_j^2}}{1 + \left(\sigma_d^2 - E\left\{\left|\tilde{d}_n\right|^2\right\}\right) \cdot \sum_{i=1}^{J}\left|H^{(i)}(f)\right|^2 / \sigma_i^2}$$

$$G(f) = \sum_{j=1}^{J} P^{(j)}(f) \cdot H^{(j)}(f) - T \int_{BN} \sum_{j=1}^{J} P^{(j)}(f) \cdot H^{(j)}(f)df$$

avec

$$g_0 = \frac{\beta \cdot \sigma_d^2}{1 + \beta \cdot E\left\{\left|\tilde{d}_n\right|^2\right\}}$$

et

$$\beta = T. \int_{BN} \frac{\sum_{i=1}^{J}\left|H^{(i)}(f)\right|^2 / \sigma_i^2}{1 + \left(\sigma_d^2 - E\left\{\left|\tilde{d}_n\right|^2\right\}\right) \cdot \sum_{i=1}^{J}\left|H^{(i)}(f)\right|^2 / \sigma_i^2} df$$

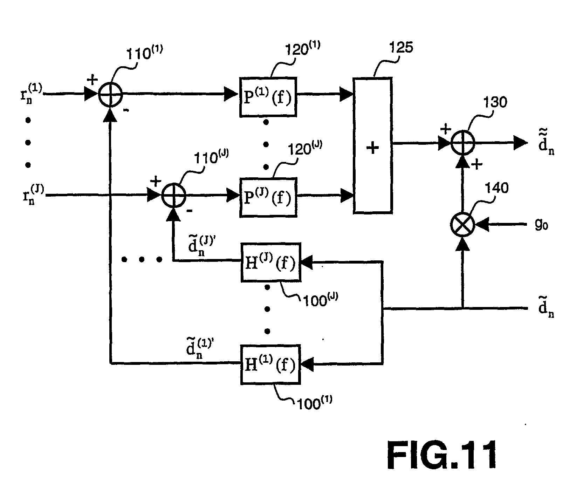

L'annuleur permettant de supprimer les interférences intersymboles produits par ces canaux de transmission est représenté à la figure 11. Cette figure est à rapprocher de la figure 4 (cas SISO). Le filtre 100 est remplacé par J filtres $100^{(j)}$ de fonction de transfert $H^{(j)}(f), j \in [1,...,J]$, traitant chacun la suite d'échantillons $\tilde{d}_n$. Les symboles en sortie des filtres $100^{(j)}$, notés $\tilde{d}_n^{j}$ avec $j \in [1,...,J]$, sont soustraits respectivement aux symboles $r_n^{(j)}$ par l'intermédiaire de circuits soustracteurs $110^{(j)}$. La sortie des circuits soustracteurs $110^{(j)}$ est ensuite filtrée par un filtre $120^{(j)}$ de fonction de transfert $P^{(j)}(f)$. Les symboles délivrés par les J filtres $P^{(j)}(f)$, $j \in [1,...,J]$, sont ensuite additionnés entre eux par un circuit additionneur 125. Enfin, les symboles obtenus à la sortie du circuit additionneur 125 sont additionnés aux symboles complexes de la suite $\{\tilde{d}_n\}_{n \in N}$ affectés du coefficient correcteur d'amplitude $g_o$ au moyen du circuit additionneur 130, lequel délivre la suite de symboles complexes $\{\tilde{\tilde{d}}_n\}_{n \in N}$.

Cet annuleur d'interférences intersymboles présente les mêmes avantages que celui de la figure 4, à savoir qu'il comporte des filtres de taille réduite (faible nombre de coefficients). Les coefficients des filtre peuvent êtres déterminés soit par un circuit d'estimation du canal de transmission, soit par un circuit de traitement numérique mettant en oeuvre un algorithme d'adaptation minimisant un critère d'optimisation donné.

Comme le dispositif de la figure 4, il peut également être utilisé dans un dispositif de turbo-égalisation.

Bien qu'il ne soit pas décrit de manière détaillée, le cas dit de réception fractionnée est équivalent au cas SIMO. La réception dite fractionnée consiste à capter les signaux avec une antenne de réception unique, puis à produire plusieurs suites d'échantillons décalées entre elles d'une fraction 1/m de la période symbole T, la période d'échantillonnage de ces suites restant égale à T. Si m est un nombre entier, ces suites peuvent alors être traitées comme montré à la figure 11.

Nous avons, dans cette description, exprimer les fonctions de transfert sous forme de transformées de Fourier (en f). Celles-ci peuvent également s'exprimer de façon plus générale selon une transformée en z, de manière équivalente.

**Revendications**

1. Dispositif pour annuler les interférences entre symboles dans une suite d'échantillons d'entrée $(\{r_n\}_{n\in\mathbb{N}})$ d'un signal numérique provenant d'un canal de transmission défini par sa fonction de transfert H(f) dans le domaine fréquentiel, chaque échantillon étant représentatif d'un symbole complexe, le dispositif comportant :

   - un premier filtre (100) qui converge vers un filtre de fonction de transfert H(f), lequel premier filtre reçoit en entrée une suite d'échantillons $(\{\tilde{d}_n\}_{n\in\mathbb{N}})$ représentative du signal numérique émis à l'entrée dudit canal de transmission,
   - un circuit soustracteur (110) pour retrancher la sortie $(\{\tilde{d}_n\}_{n\in\mathbb{N}})$ dudit premier filtre à ladite suite d'échantillons d'entrée $(\{r_n\}_{n\in\mathbb{N}})$,
   - un second filtre (120) qui converge vers un filtre adapté au canal de transmission, lequel second filtre reçoit en entrée la sortie $(\{e_n\}_{n\in\mathbb{N}})$ dudit circuit soustracteur (110), ledit dispositif étant
   - **caractérisé en ce qu'**il comprend en outre un circuit de sortie (130) destiné à combiner la sortie dudit second filtre (120) et la suite des échantillons $(\{\tilde{d}_n\}_{n\in\mathbb{N}})$ représentative du signal numérique émis à l'entrée dudit canal de transmission pour générer une suite de symboles complexes $(\{\tilde{\tilde{d}}_n\}_{n\in\mathbb{N}})$ débarrassés des interférences entre symboles engendrées par le canal de transmission.

2. Dispositif selon la revendication 1, **caractérisé en ce que** ledit circuit de sortie est un circuit additionneur (130) destiné à additionner la sortie dudit second filtre (120) avec ladite suite des échantillons $(\{\tilde{d}_n\}_{n\in\mathbb{N}})$ représentative du signal numérique émis à l'entrée dudit canal de transmission.

3. Dispositif selon la revendication 2, **caractérisé en ce que** les échantillons $(\{\tilde{d}_n\}_{n\in\mathbb{N}})$ de la suite représentative du signal numérique émis à l'entrée du canal de transmissions et qui sont traités par ledit circuit additionneur (130) sont affectés d'un coefficient correcteur d'amplitude.

4. Dispositif selon la revendication 3, **caractérisé en ce que**, dans le cas d'un canal de transmission perturbé par un bruit additif ayant des coefficients variant dans le temps, le coefficient correcteur d'amplitude est fonction de la puissance estimée du canal de transmission et de la variance du bruit additif.

5. Dispositif selon la revendication 4, **caractérisé en ce que**, dans le cas d'un canal de transmission perturbé par un bruit additif de variance $\sigma_w^2$ ayant des coefficients $\Gamma_k(n)$ variant dans le temps tel que, à l'instant n,

$$\sum_{k=-L_1+l}^{L_2} \left|\Gamma_k(n)\right|^2 = \alpha_n \ ,$$

le coefficient correcteur d'amplitude affecté à la suite d'échantillons $(\{\tilde{d}_n\}_{n\in\mathbb{N}})$ représentative du signal numérique émis à l'entrée dudit canal de transmission est égal à $\dfrac{\alpha_n}{\sigma_w^2 + \alpha_n}$ et la fonction de transfert du filtre vers lequel converge le second filtre est

$$\frac{1}{\sigma_w^2 + \alpha_n}\left(\left|H(f)\right|^2 - \alpha_n\right).$$

6. Dispositif selon la revendication 4, **caractérisé en ce que**, dans le cas d'un canal de transmission perturbé par un bruit additif de variance $\sigma_w^2$, le coefficient correcteur d'amplitude affecté à la suite d'échantillons $(\{\tilde{d}_n\}_{n\in\mathbb{N}})$ représentative du signal numérique émis à l'entrée dudit canal de transmission de variance $\sigma^2_d$ est égal à

$$g_0 = \frac{\beta \cdot \sigma_d^2}{1 + \beta \cdot E\left\{\left|\tilde{d}_n\right|^2\right\}}$$

avec

$$\beta = T. \int_{-\frac{1}{2T}}^{\frac{1}{2T}} \frac{\left|H(f)\right|^2}{\left|H(f)\right|^2 \cdot \left(\sigma_d^2 - E\left\{\left|\tilde{d}_n\right|^2\right\}\right) + \sigma_w^2} df$$

où T représente la période des symboles émis, et la fonction de transfert du filtre vers lequel converge le second filtre est

$$\frac{g_0}{\beta} \times \frac{H*(f)}{\left|H(f)\right|^2 \cdot \left(\sigma_d^2 - E\left\{\left|\tilde{d}_n\right|^2\right\}\right) + \sigma_w^2} .$$

7. Dispositif selon l'une des revendications 1 à 5, **caractérisé en ce que** les coefficients desdits premier et second filtres (100,120) sont déterminés par un circuit de traitement numérique mettant en oeuvre un algorithme d'adaptation se basant sur un critère d'optimisation visant à minimiser l'influence des interférences entre symboles à la sortie dudit dispositif.

8. Dispositif selon l'une des revendications 1 à 6, **caractérisé en ce que** les coefficients desdits premier et second filtres (100,120) sont déterminés par un circuit d'estimation du canal de transmission.

9. Dispositif selon l'une quelconque des revendications précédentes, **caractérisé en ce qu'**il est utilisé pour la réception de données numériques transmises à travers un canal hertzien.

10. Récepteur de signaux numériques **caractérisé en ce qu'**il comporte un dispositif d'annulation des interférences entre symboles selon l'une des revendications 1 à 9 et un circuit dédié pour générer ladite suite d'échantillons $\left(\left\{\tilde{d}_n\right\}_{n\in\mathbb{N}}\right)$ représentative du signal numérique émis à l'entrée dudit canal de transmission.

11. Récepteur selon la revendication 10, **caractérisé en ce que** ledit circuit dédié est un égaliseur linéaire transverse ou un égaliseur à maximum de vraisemblance recevant en entrée ladite suite d'échantillons d'entrée $\left(\left\{r_n\right\}_{n\in\mathbb{N}}\right)$.

12. Dispositif de turboégalisation comportant une pluralité de modules de turboégalisation en série **caractérisé en ce que** chaque module de turboégalisation de rang supérieur à 1 dans ladite série de modules comporte un dispositif d'annulation d'interférences entre symboles selon l'une revendications 1 à 9 et **en ce que**, pour chaque dispositif d'annulation d'interférences, ladite suite d'échantillons $\left(\left\{\tilde{d}_n\right\}_{n\in\mathbb{N}}\right)$ représentative du signal numérique émis à l'entrée du canal de transmission est fournie par le module de turboégalisation de rang inférieur.

13. Dispositif pour annuler les interférences entre symboles dans J suites d'échantillons d'entrée $\left(\left\{r_n^{(j)}\right\}_{n\in\mathbb{N}}\right)$ d'un signal numérique provenant de J canaux de transmission définis par leurs fonctions de transfert $H^{(i)}(f)$ dans le domaine fréquentiel, J étant un entier supérieur ou égal à 2, chaque échantillon étant représentatif d'un symbole complexe, comportant :

   - un premier ensemble de J filtres $(100^{(j)})$ qui convergent chacun vers un filtre de fonction de transfert $H^{(j)}(f)$, $j\in[1,...,J]$, chacun des filtres dudit premier ensemble recevant en entrée une suite d'échantillons $\left(\left\{\tilde{d}_n\right\}_{n\in\mathbb{N}}\right)$ représentative du signal numérique émis à l'entrée desdits canaux de transmission,
   - un ensemble de J circuits soustracteurs $(110^{(j)})$ pour retrancher les sorties $\left(\left\{\tilde{d}_n^{(j)'}\right\}_{n\in\mathbb{N}}\right)$ desdits J filtres du premier ensemble auxdites J suites d'échantillons d'entrée $\left(\left\{r_n^{(j)}\right\}_{n\in\mathbb{N}}\right)$ respectivement,

- un second ensemble de J filtres (120$^{(j)}$) qui convergent vers des filtres adaptés auxdits J canaux de transmission, chaque filtre dudit second ensemble recevant en entrée la sortie d'un desdits J circuits soustracteurs (110$^{(j)}$), ledit dispositif étant
- **caractérisé en ce qu'**il comprend en outre :

- un premier circuit additionneur (125) pour additionner les échantillons délivrés par les J filtres (120$^{(j)}$) dudit second ensemble,
- un circuit de sortie (130) destiné à combiner la sortie dudit premier circuit additionneur (125) et la suite des échantillons $(\{\tilde{d}_n\}_{n\in\mathbb{N}})$ représentative du signal numérique émis à l'entrée desdits canaux de transmission pour générer une suite de symboles complexes $(\{\tilde{\tilde{d}}_n\}_{n\in\mathbb{N}})$ débarrassés des interférences entre symboles engendrées par lesdits canaux de transmission.

14. Dispositif selon la revendication 13, **caractérisé en ce que** ledit circuit de sortie est un deuxième circuit additionneur (130) destiné à additionner la sortie dudit premier circuit additionneur (125) avec ladite suite des échantillons $(\{\tilde{d}_n\}_{n\in\mathbb{N}})$ représentative du signal numérique émis à l'entrée desdits canaux de transmission.

15. Dispositif selon la revendication 14, **caractérisé en ce que** les échantillons $(\{\tilde{d}_n\}_{n\in\mathbb{N}})$ de la suite représentative du signal numérique émis à l'entrée desdits canaux de transmission qui sont traités par ledit deuxième circuit additionneur (130) sont affectés d'un coefficient correcteur d'amplitude.

16. Dispositif selon l'une des revendications 13 à 15, **caractérisé en ce que** les coefficients des filtres desdits premier et second ensembles (100$^{(j)}$,120$^{(j)}$) sont déterminés par un circuit de traitement numérique mettant en oeuvre un algorithme d'adaptation se basant sur un critère d'optimisation visant à minimiser l'influence des interférences entre symboles à la sortie dudit dispositif.

17. Dispositif selon l'une des revendications 13 à 15, **caractérisé en ce que** les coefficients des filtres desdits premier et second ensembles (100$^{(j)}$,120$^{(j)}$) sont déterminés par un circuit d'estimation des canaux de transmission.

18. Récepteur de signaux numériques **caractérisé en ce qu'**il comporte un dispositif d'annulation des interférences entre symboles selon l'une des revendications 13 à 17 et un circuit dédié pour générer ladite suite d'échantillons $(\{\tilde{d}_n\}_{n\in\mathbb{N}})$ représentative du signal numérique émis à l'entrée desdits canaux de transmission.

19. Récepteur selon la revendication 18, **caractérisé en ce que** ledit circuit dédié est un égaliseur linéaire transverse ou un égaliseur à maximum de vraisemblance recevant en entrée lesdites J suites d'échantillons d'entrée $(\{r_n^{(j)}\}_{n\in\mathbb{N}})$.

20. Dispositif de turboégalisation comportant une pluralité de modules de turboégalisation en série **caractérisé en ce que** chaque module de turboégalisation de rang supérieur à 1 dans ladite série de modules comporte un dispositif d'annulation d'interférences entre symboles selon l'une revendications 13 à 17 et **en ce que**, pour chaque dispositif d'annulation d'interférences, ladite suite d'échantillons $(\{\tilde{d}_n\}_{n\in\mathbb{N}})$ représentative du signal numérique émis à l'entrée du canal de transmission est fournie par le module de turboégalisation de rang inférieur.

**Patentansprüche**

1. Vorrichtung zur Aufhebung der Interferenzen zwischen Symbolen in einer Eingangsmusterfolge ($\{r_n\}_{n\in\mathbb{N}}$) eines digitalen Signals, das aus einem Übertragungskanal stammt, der durch seine Übertragungsfunktion H(f) in dem Frequenzbereich definiert ist, wobei jedes Muster repräsentativ für ein komplexes Symbol ist, wobei die Vorrichtung aufweist:

- einen ersten Filter (100), der sich einem Filter mit Übertragungsfunktion H(f) nähert, wobei der erste Filter am Eingang eine Musterfolge $(\{\tilde{d}_n\}_{n\in\mathbb{N}})$ empfängt, die repräsentativ für das am Eingang des Übertragungskanals ausgesandte digitale Signal ist,
- eine Subtrahierschaltung (110) zum Subtrahieren des Ausgangs $(\{\tilde{d}'_n\}_{n\in\mathbb{N}})$ des ersten Filters von der Eingangsmusterfolge ($\{r_n\}_{n\in\mathbb{N}}$),
- einen zweiten Filter (120), der sich einem dem Übertragungskanal angepassten Filter nähert, wobei der zweite Filter am Eingang den Ausgang $(\{e_n\}_{n\in\mathbb{N}})$ der Subtrahierschaltung (110) empfängt, wobei die Vorrichtung
- **dadurch gekennzeichnet ist, dass** sie außerdem eine Ausgangsschaltung (130) aufweist, die dafür bestimmt ist, den Ausgang des zweiten Filters (120) und die Musterfolge $(\{\tilde{d}_n\}_{n\in\mathbb{N}})$, d, die repräsentativ für das am Eingang des Übertragungskanals ausgesandte digitale Signal ist, zu kombinieren, um eine Folge komplexer Symbole $(\{\tilde{d}_n\}_{n \in \mathbb{N}})$ z zu erzeugen, die befreit ist von den Interferenzen zwischen Symbolen, die durch den Übertragungskanal hervorgerufen werden.

2. Vorrichtung gemäß Anspruch 1, **dadurch gekennzeichnet, dass** die Ausgangsschaltung eine Addierschaltung (130) ist, die dafür bestimmt ist, den Ausgang des zweiten Filters (120) zu der Musterfolge $(\{\tilde{d}_n\}_{n \in \mathbb{N}})$, die repräsentativ für das am Eingang des Übertragungskanals ausgesandte digitale Signal ist, zu addieren.

3. Vorrichtung gemäß Anspruch 2, **dadurch gekennzeichnet, dass** den Mustern $(\{\tilde{d}_n\}_{n \in \mathbb{N}})$ der Folge, die repräsentativ ist für das am Eingang des Übertragungskanals ausgesandte digitale Signal, und die von der Addierschaltung (130) verarbeitet wird, ein Amplitudenkorrekturkoeffizient zugeordnet ist.

4. Vorrichtung gemäß Anspruch 3, **dadurch gekennzeichnet, dass** in dem Fall eines Übertragungskanals, der durch ein Rauschen mit in der Zeit variierenden Koeffizienten gestört ist, der Amplitudenkorrekturkoeffizient von der veranschlagten Leistung des Übertragungskanals und der Varianz des Rauschens abhängt.

5. Vorrichtung gemäß Anspruch 4, **dadurch gekennzeichnet, dass** in dem Fall eines Übertragungskanals, der durch ein Rauschen der Varianz $\sigma_w^{2'}$ mit in der Zeit variierenden Koeffizienten $\Gamma_k(n)$ gestört ist, wie

$$\sum_{k=L_1+1}^{L_2} \left| \Gamma_k(n) \right|^2 = \alpha_n$$

zu dem Zeitpunkt n, der Amplitudenkorrekturkoeffizient, welcher der Musterfolge $(\{\tilde{d}_n\}_{n \in \mathbb{N}})$ zugeordnet ist, die repräsentativ für das am Eingang des Übertragungskanals ausgesandte digitale Signal ist, gleich $\dfrac{\alpha_n}{\sigma_w^2 + \alpha_n}$ ist und die Übertragungsfunktion des Filters, dem sich der zweite Filter nähert,

$$\frac{1}{\sigma_w^2 + \alpha_n} \left( \left| H(f) \right|^2 - \alpha_n \right)$$

ist.

6. Vorrichtung gemäß Anspruch 4, **dadurch gekennzeichnet, dass** in dem Fall eines Übertragungskanals, der durch ein Rauschen der Varianz $\sigma_w^2$ gestört ist, der Amplitudenkorrekturkoeffizient, welcher der Musterfolge $(\{\tilde{d}_n\}_{n \in \mathbb{N}})$ zugeordnet ist, die repräsentativ für das am Eingang des Übertragungskanals mit der Varianz $\sigma_w^2$ ausgesandte digitale Signal ist, gleich

$$g_0 = \frac{\beta \cdot \sigma_d^2}{1 + \beta \cdot E\left\{ \left| \tilde{d}_n \right|^2 \right\}}$$

ist ausgesandten Symbole darstellt und die Übertragungsfunktion des Filters, dem sich der zweite Filter nähert,

$$\frac{g_0}{\beta} x \frac{H^*(f)}{|H(f)|^2 \cdot \left( \sigma_d^2 - E\left\{ \left| \tilde{d}_n \right|^2 \right\} \right) + \sigma_w^2}$$

ist.

**7.** Vorrichtung gemäß einem der Ansprüche 1 bis 5, **dadurch gekennzeichnet, dass** die Koeffizienten des ersten und zweiten Filters (100, 120) durch eine digitale Verarbeitungsschaltung bestimmt werden, die einen Anpassungsalgorithmus einsetzt, der auf einem Optimierungskriterium basiert, das darauf abzielt, den Einfluss der Interferenzen zwischen Symbolen am Ausgang der Vorrichtung zu minimieren.

**8.** Vorrichtung gemäß einem der Ansprüche 1 bis 6, **dadurch gekennzeichnet, dass** die Koeffizienten des ersten und zweiten Filters (100, 120) durch eine Schätzschaltung des Übertragungskanals bestimmt werden.

**9.** Vorrichtung gemäß irgendeinem der vorherigen Ansprüche, **dadurch gekennzeichnet, dass** sie für den Empfang von digitalen Daten verwendet wird, die durch einen Funkkanal übertragen werden.

**10.** Empfänger von digitalen Daten, **dadurch gekennzeichnet, dass** er eine Vorrichtung zur Aufhebung der Interferenzen zwischen Symbolen gemäß einem der Ansprüche 1 bis 9 und eine dedizierte Schaltung aufweist, um die Musterfolge $(\{\tilde{d}_n\}_{n\in\mathbb{N}})$ zu erzeugen, die repräsentativ für das am Eingang des Übertragungskanals ausgesandte digitale Signal ist.

**11.** Empfänger gemäß Anspruch 10, **dadurch gekennzeichnet, dass** die dedizierte Schaltung ein querlinearer Entzerrer oder ein Entzerrer mit maximaler Wahrscheinlichkeit ist, der am Eingang die Eingangsmusterfolge $(\{r_n\}_{n\in\mathbb{N}})$ empfängt.

**12.** Turboentzerrungsvorrichtung mit einer Vielzahl von in Reihe geschalteten Turboentzerrungsmodulen, **dadurch gekennzeichnet, dass** jedes Turboentzerrungsmodul mit einer höheren Rangstufe als 1 in der Modulreihe eine Vorrichtung zur Aufhebung der Interferenzen zwischen Symbolen gemäß einem der Ansprüche 1 bis 9 aufweist, und dass für jede Vorrichtung zur Aufhebung von Interferenzen die Musterfolge $(\{\tilde{d}_n\}_{n\in\mathbb{N}})$, die repräsentativ für das am Eingang des Übertragungskanals ausgesandte digitale Signal ist, von dem Turboentzerrungsmodul mit niedrigerer Rangstufe geliefert wird.

**13.** Vorrichtung zur Aufhebung der Interferenzen zwischen Symbolen in J Eingangsmusterfolgen $(\{r_n^{(j)}\}_{n\in\mathbb{N}})$ eines digitalen Signals, das aus J Übertragungskanälen stammt, die durch ihre Übertragungsfunktionen $H^{(j)}(f)$ in dem Frequenzbereich definiert sind, wobei J eine Ganzzahl größer oder gleich 2 ist, wobei jedes Muster repräsentativ für ein komplexes Symbol ist, mit:

- einer ersten Anordnung von J Filtern $(100^{(j)})$, die sich jeweils einem Übertragungsfunktionsfilter $H^{(j)}(f)$ nähern, $j\in[1,...,J]$, wobei jeder der Filter der ersten Anordnung am Eingang eine Musterfolge $\{\tilde{d}_n\}_{n\in\mathbb{N}}$ ϵ empfängt, die repräsentativ für das am Eingang der Übertragungskanäle ausgesandte digitale Signal ist,
- einer Anordnung von J Subtrahierschaltungen $(110^{(j)})$, um die Ausgänge $(\{\tilde{d}_n^{(j)}\}_{n\in\mathbb{N}})$ der J Filter der ersten Anordnung jeweils von den J Eingangsmusterfolgen $(\{r_n^{(j)}\}_{n\in\mathbb{N}})$ ε abzuziehen,
- einer zweiten Anordnung von J Filtern $(120^{(j)})$, die sich den J Übertragungskanälen angepassten Filtern nähern, wobei jeder Filter der zweiten Anordnung am Eingang den Ausgang einer der J Subtrahierschaltungen $(110^{(j)})$ empfängt, wobei die Vorrichtung
- **dadurch gekennzeichnet ist, dass** sie außerdem eine erste Addierschaltung (125) aufweist, um die von den J Filtern $(120^{(j)})$ der zweiten Anordnung gelieferten Muster zu addieren,
- eine Ausgangsschaltung (130) aufweist, die dafür bestimmt ist, den Ausgang der ersten Addierschaltung (125) und die Musterfolge $(\{\tilde{d}_n\}_{n\in\mathbb{N}})$, die repräsentativ für das am Eingang der Übertragungskanäle ausgesandte digitale Signal ist, zu kombinieren, um eine Folge komplexer Symbole $(\{\tilde{d}_n\}_{n\in\mathbb{N}})$ zu erzeugen, die befreit ist von den Interferenzen zwischen Symbolen, die durch die Übertragungskanäle hervorgerufen werden.

**14.** Vorrichtung gemäß Anspruch 13, **dadurch gekennzeichnet, dass** die Ausgangsschaltung eine zweite Addierschaltung (130) ist, die dafür bestimmt ist, den Ausgang der ersten Addierschaltung (125) zu der Musterfol-

ge $(\{\tilde{d}_n\}_{n\in\mathbb{N}})$, die repräsentativ für das am Eingang der Übertragungskanäle ausgesandte digitale Signal ist, zu addieren.

15. Vorrichtung gemäß Anspruch 14, **dadurch gekennzeichnet, dass** den Mustern $(\{\tilde{d}_n\}_{n\in\mathbb{N}})$ der Folge, die repräsentativ ist für das am Eingang der Übertragungskanäle ausgesandte digitale Signal, und die von der zweiten Addierschaltung (130) verarbeitet wird, ein Amplitudenkorrekturkoeffizient zugeordnet ist.

16. Vorrichtung gemäß einem der Ansprüche 13 bis 15, **dadurch gekennzeichnet, dass** die Koeffizienten der ersten und zweiten Anordnung ($100^{(j)}$, $120^{(j)}$) durch eine digitale Verarbeitungsschaltung bestimmt werden, die einen Anpassungsalgorithmus einsetzt, der auf einem Optimierungskriterium basiert, das darauf abzielt, den Einfluss der Interferenzen zwischen Symbolen am Ausgang der Vorrichtung zu minimieren.

17. Vorrichtung gemäß einem der Ansprüche 13 bis 15, **dadurch gekennzeichnet, dass** die Koeffizienten der Filter der ersten und zweiten Anordnung ($100^{(j)}$, $120^{(j)}$) durch eine Schätzschaltung der Übertragungskanäle bestimmt werden.

18. Empfänger von digitalen Daten, **dadurch gekennzeichnet, dass** er eine Vorrichtung zur Aufhebung der Interferenzen zwischen Symbolen gemäß einem der Ansprüche 13 bis 17 und eine dedizierte Schaltung aufweist, um die Musterfolge $(\{\tilde{d}_n\}_{n\in\mathbb{N}})$ zu erzeugen, die repräsentativ für das am Eingang der Übertragungskanäle ausgesandte digitale Signal ist.

19. Empfänger gemäß Anspruch 18, **dadurch gekennzeichnet, dass** die dedizierte Schaltung ein querlinearer Entzerrer oder ein Entzerrer mit maximaler Wahrscheinlichkeit ist, der am Eingang die J Eingangsmusterfolgen $(\{r_n^{(j)}\}_{n\in\mathbb{N}})$ empfängt.

20. Turboentzerrungsvorrichtung mit einer Vielzahl von in Reihe geschalteten Turboentzerrungsmodulen, **dadurch gekennzeichnet, dass** jedes Turboentzerrungsmodul mit einer höheren Rangstufe als 1 in der Modulreihe eine Vorrichtung zur Aufhebung der Interferenzen zwischen Symbolen gemäß einem der Ansprüche 13 bis 17 aufweist, und dass für jede Vorrichtung zur Aufhebung von Interferenzen die Musterfolge $(\{\tilde{d}_n\}_{n\in\mathbb{N}})$, die repräsentativ für das am Eingang des Übertragungskanals ausgesandte digitale Signal ist, von dem Turboentzerrungsmodul mit niedrigerer Rangstufe geliefert wird.

**Claims**

1. Device for eliminating interference between symbols in a series of input samples $(\{r_n\}_{n\in\mathbb{N}})$ o of a digital signal obtained from a transmission channel defined by its transfer function H(f) in the frequential domaine, each sample being representative of a complex symbol, the device comprising:

   - a first filter (100) which converges towards a transfer function filter H(f), which first filter receives as input a series of samples $(\{\tilde{d}_n\}_{n\in\mathbb{N}})$ representative of the digital signal emitted at the input of the said transmission channel;
   - a subtraction circuit (110) to subtract the output $(\{\hat{d}_n\}_{n\in\mathbb{N}})$ of the said first filter from the said series of input samples $(\{r_n\}_{n\in\mathbb{N}})$;
   - a second filter (120) which converges towards a filter adapted to the transmission channel, which second filter receives as input the output $(\{\tilde{d}_n\}_{n\in\mathbb{N}})$ of the said subtraction circuit (110), the said device being **characterised in that** it additionally comprises an output circuit (130) which is designed to combine the output of the said second filter (120) and the series of samples $(\{\tilde{d}_n\}_{n\in\mathbb{N}})$ representative of the digital signal emitted at the input of the said transmission channel in order to generate a series of complex symbols $(\{\overline{d}_n\}_{n\in\mathbb{N}})$ which are free from interference between symbols generated by the transmission channel.

2. Device according to claim 1, **characterised in that** the said output circuit is an addition circuit (130) which is designed to add the output of the said second filter (120) to the said series of samples $(\{\tilde{d}_n\}_{n\in\mathbb{N}})$ representative of the digital signal emitted at the input of the said transmission channel.

3. Device according to claim 2, **characterised in that** the samples $(\{\tilde{d}_n\}_{n\in\mathbb{N}})$ of the series representative of the digital signal emitted at the input of the transmission channel, and which are processed by the said addition circuit (130), are allocated an amplitude correction coefficient.

4. Device according to claim 3, **characterised in that**, in the case of a transmission channel which is disrupted by an addition noise with coefficients which vary over a period of time, the amplitude correction coefficient depends on the estimated power of the transmission channel and on the variance of the addition noise.

5. Device according to claim 4, **characterised in that**, in the case of a transmission channel which is disrupted by an addition noise with variance of $\sigma_w^2$ with coefficients $\Gamma_k(n)$ which vary over a period of time such that, at the instant n,

$$\sum_{k=-L_1+1}^{L_2} |\Gamma_k(n)|^2 = \alpha_n$$

the amplitude correction coefficient which is allocated to the series of samples $((\tilde{d}_n)_{n \in N})$ representative of the digital signal emitted at the input of the said transmission channel is equal to $\dfrac{\alpha_n}{\sigma_w^2 + \alpha_n}$, and the transfer function of the filter towards which the second filter converges is

$$\frac{1}{\sigma_w^2 + \alpha_n}\left(|H(f)|^2 - \alpha_n\right).$$

6. Device according to claim 4, **characterised in that**, in the case of a transmission channel which is disrupted by a variance addition noise $\sigma_w^2$, the amplitude correction coefficient which is allocated to the series of samples $(\{\tilde{d}_n\}_{n \in N})$ representative of the digital signal emitted at the input of the said variance transmission channel $\sigma_d^2$ is equal to

$$g_0 = \frac{\beta \cdot \sigma_d^2}{1 + \beta \cdot E\{|\tilde{d}_n|^2\}}$$

with

$$\beta = T \cdot \int_{-1/2T}^{1/2T} \frac{|H(f)|^2}{|H(f)|^2 \cdot (\sigma_d^2 - E\{|\tilde{d}_n|^2\}) + \sigma_w^2} \, df \ ,$$

where T represents the period of the symbols emitted, and the transfer function of the filter towards which the second filter converges is

$$\frac{g_0}{\beta} x \frac{H*(f)}{|H(f)|^2 \cdot (\sigma_d^2 - E\{|\tilde{d}_n|^2\}) + \sigma_w^2} \ .$$

7. Device according to any one of claims 1 to 5, **characterised in that** the coefficients of the said first and second filters (100,120) are determined by a digital processing circuit which implements an adaptation algorithm which is based on an optimisation criterion designed to minimise the influence of the interference between symbols at the output from the said device.

8. Device according to any one of claims 1 to 6, **characterised in that** the coefficients of the said first and second filters (100, 120) are determined by an estimation circuit of the transmission channel.

9. Device according to any one of the preceding claims, **characterised in that** it is used for receipt of digital data transmitted via a radio channel.

10. Digital signal receiver, **characterised in that** it comprises a device for eliminating interference between symbols according to any one of claims 1 to 9, and a dedicated circuit to generate the said series of samples $(\{d_n\}n\epsilon N)$ - representative of the digital signal emitted at the input of the said transmission channel.

11. Receiver according to claim 10, **characterised in that** the said dedicated circuit is a transverse linear equaliser or a maximum probability equaliser which receives as input the said series of input samples $(\{r_n\}n\epsilon N)$..

12. Turbo-equalisation device comprising a plurality of turbo-equalisation modules in series, **characterised in that** each turbo-equalisation model with a rank higher than 1 in the said series of modules comprises a device according to any one of claims 1 to 9 for elimination of interference between symbols, and **in that**, for each device for elimination of interference, the said series of samples $(\{\overline{d}_n\}n\epsilon N)$ representative of the digital signal emitted at the input of the transmission channel is supplied by the turbo-equalisation module with a lower rank.

13. Device for eliminating interference between symbols in J series of input samples $(\{r_n^{(j)}\}n\epsilon N)$ of a digital signal obtained from J transmission channels defined by their transfer functions $H^{(i)}(f)$ in the frequential domain, J being a whole number equal to 2 or more, each sample being representative of a complex symbol, comprising:

   - a first assembly of J filters $(100^{(j)})$ which each converge towards a transfer function filter $H^{(j)}(f)$, $j \in [1, ...,J]$, each of the filters of the said first assembly receiving as input a series of samples $(\{\overline{d}_n\}n\epsilon N)$ representative of the digital signal emitted at the input of the said transmission channels;
   - an assembly of J subtraction circuits $(110^{(j)})$ in order to subtract the outputs $(\{\widehat{\overline{d}_n}^{(j)}\}n\epsilon N)$ of the said J filters of the first assembly from the said J series of input symbols $(\{r_n^{(j)}\}n\epsilon N)$ respectively;
   - a second assembly of J filters $(120^{(j)})$ which converge towards filters adapted to the said J transmission channels, each filter of the said second assembly receiving as input the output of one of the said J subtraction circuits $(110^{(j)})$, the said device being **characterised in that** in additionally comprises:

   - a first additional circuit (125) in order to add samples supplied by the J filters $(120^{(j)})$ of the said second assembly;
   - an output circuit (130) which is designed to combine the output of the said first addition circuit (125) and the series of samples $(\{\overline{d}_n\}n\epsilon N)$ representative of the digital signal emitted at the input of the said transmission channels in order to generate a series of complex symbols $(\{\widehat{\overline{d}_n}\}n\epsilon N)$ which are free from interference between symbols generated by the said transmission channels.

14. Device according to claim 13, **characterised in that** the said output circuit is a second addition circuit (130) which is designed to add the output of the first addition circuit (125) to the said series of samples $(\{\overline{d}_n\}n\epsilon N)$ representative of the digital signal emitted at the input of the said transmission channels.

15. Device according to claim 14, **characterised in that** the samples $(\{\overline{d}_n\}n\epsilon N)$ of the series representative of the digital signal emitted at the input of the said transmission channels which are processed by the said second addition circuit (130) are allocated an amplitude correction coefficient.

16. Device according to any one of claims 13 to 15, **characterised in that** the coefficients of the filters of the said first and second assemblies $(100^{(j)}, 120^{(j)})$ are determined by a digital processing circuit which implements an adaptation algorithm which is based on a criterion of optimisation designed to minimise the influence of the interference between symbols at the output of the said device.

17. Device according to any one of claims 13 to 15, **characterised in that** the coefficients of the filters of the said first and second assemblies $(100^{(j)}, 120^{(j)})$ are determined by a circuit for estimating transmission channels.

18. Digital signal receiver, **characterised in that** it comprises a device according to any one of claims 13 to 17 for eliminating interference between symbols, and a dedicated circuit in order to generate the said series of samples $(\{\widehat{d}_n\}n\epsilon N)$ representative of the digital signal emitted at the input of the said transmission channels.

19. Receiver according to claim 18, **characterised in that** the said dedicated circuit is a transverse linear equaliser or a maximum probability equaliser which receives as input the said J series of input samples $(\{r_n^{(j)}\}n\epsilon N)$. .

**20.** Turbo-equalisation device comprising a plurality of turbo-equalisation modules in series, **characterised in that** each turbo-equalisation module of a rank higher than 1 in the said series of modules comprises a device according to any one of claims 13 to 17 for elimination of interference between symbols, and **in that**, for each device for elimination of interference, the said series of samples $(\{\tilde{d}_n\}n \epsilon N)$ representative of the digital signal emitted at the input of the transmission channel is supplied by the turbo-equalisation module of a lower rank.

$d_n \rightarrow$ [modulateur] $\rightarrow$ [Filtre d'émission] $\rightarrow$ [Milieu de transmission] $\rightarrow$ [Filtre de réception] $\rightarrow$ [démodulateur] $\rightarrow +$ $\bigoplus$ $\xrightarrow{T}$ $\bullet \rightarrow r_n$

$+ \uparrow w_n$

# FIG.1

10

$r_n \rightarrow \boxed{\dfrac{1}{\sigma_w^2 + \alpha_n} H^*(f)} \rightarrow + \bigoplus^{30} \rightarrow \tilde{\tilde{d}}_n$

$-$

$\tilde{d}_n \rightarrow \boxed{\dfrac{1}{\sigma_w^2 + \alpha_n}\left(\left|H(f)\right|^2 - \alpha_n\right)}$

20

# FIG.2
## (art antérieur)

10

$r_n \rightarrow \boxed{\dfrac{1}{\sigma_w^2 + \alpha_n} H^*(f)} \rightarrow + \bigoplus^{30} \rightarrow \tilde{\tilde{d}}_n$

$\dfrac{\alpha_n}{\sigma_w^2 + \alpha_n}\tilde{d}_n$   $-$

$-$

$\tilde{d}_n \rightarrow \boxed{H(f)} \rightarrow \boxed{\dfrac{1}{\sigma_w^2 + \alpha_n} H^*(f)} \rightarrow \bigoplus$

$+$   23

21   22

# FIG.3

FIG.4

FIG.5

$$\frac{\alpha_n}{\sigma_w^2 + \alpha_n} \tilde{d}_n$$

$r_n$  +  110  120  +  130  $\tilde{\tilde{d}}_n$

$$\frac{1}{\sigma_w^2 + \alpha_n} H^*(f)$$

−  +

H(f)  ←  $\tilde{d}_n$

100

Algorithme
d'adaptation

# FIG.6

$r_n$  →  1$^{er}$ module  $\tilde{d}_{n,0}$  →  2$^{è}$ module  $\tilde{d}_{n,1}$  →  3$^{è}$ module  $\tilde{d}_{n,2}$  →

# FIG.7

$\tilde{d}_{n,0}$  →  Annuleur
d'interférences  →  Désentrelacement
+
Conversion
M-aire/ binaire  →  Décodeur de
canal  →  Conversion
Binaire/M-aire
+
entrelacement  $\tilde{d}_{n,1}$  →

$r_n$  →

**FIG.8**

**FIG.9**

**FIG.10**

FIG.11